# EUROPEAN PATENT SPECIFICATION

(11) **EP 1 901 512 B1**
(45) Date of publication and mention of the grant of the patent: **23.11.2011**
(21) Application number: 07021150.3
(22) Date of filing: 26.01.1999
(51) Int. Cl.: H04L 27/26, H04B 1/16

(54) **Multicarrier transmission system with low power sleep mode and rapid-on-capability**
Mehrträgerübertragungssystem mit Schlafmodus mit niedriger Leistung und schneller Einschaltfähigkeit
Système de transmission multi-porteur avec mode veille à faible alimentation et capacité rapide de mise en action

(43) Date of publication of application: 19.03.2008
(62) Divisional of application: 04022871.0
(73) Proprietor: AWARE, INC., Bedford, MA 01730 (US)
(72) Inventor: Greszczuk, John A., Stow, MA 01775 (US); Gross, Richard W., Acton, MA 01720 (US); Padir, Halil, Arlington, MA 02474-2108 (US); Tzannes, Michael A., Lexington, MA 02421 (US)
(74) Representative: Gesthuysen, von Rohr & Eggert

(56) References cited:
- EP-A- 0 473 465
- EP-A- 0 840 474
- WO-A-98/35473
- US-A- 5 452 288

## Description

The invention relates to a multicarrier transceiver having a sleep mode capability, to a method for use in a multicarrier communications environment and to use of such a method. In particular, the invention relates to multicarrier transmission systems, and comprises method and apparatus for establishing a power management sleep state in a multicarrier system.

Multicarrier transmission systems provide high speed data links between communication points. Such systems have recently been introduced for communications over the local subscriber loop that connects a telephone service subscriber to a central telephone office; in this important application they are commonly referred to as "xDSL" systems, where the "x" specifies a particular variant of DSL (digital subscriber loop) communications, e.g., ADSL (asynchronous digital subscriber loop), HDSL (HighSpeed Digital Subscriber Loop), etc. These will be referred to generically herein simply as "DSL" systems. In such systems, a pair of transceivers communicate with other by dividing the overall bandwidth of the channel interconnecting the subscriber and the central office into a large number of separate subchannels, each of limited bandwidth, operating in parallel with each other. For example, one common system divides the subscriber line channel into two hundred and fifty six subchannels, each of four kilohertz bandwidth. A first group of these (e,g., one hundred ninety six) is allocated to communications from the central office to the subscriber (this is known as the "downstream" direction); a second group (e.g., fifty-five) is allocated to communications from the subscriber to the central office (this is known as the "upstream" direction). The remaining subchannels are allocated to administrative, control and overhead functions.

Data to be communicated over the link is divided into groups of bits, one group for each subchannel. The group of bits allocated to a given subchannel is modulated onto a carrier whose frequency is specific to that channel. Typically, quadrature amplitude modulation (QAM) is used for this purpose, and the group of bits is mapped into a vector defined by one of the points of a "constellation" which specifies the allowable data points for transmission over that subchannel af a particular time. Each vector or data point thus comprises a unique symbol representing a specific bit configuration for transmission as a group over its associated subchannel. During the time period allocated for transmission of a symbol (commonly referred to as a "symbol period" or "frame"), each subchannel transmits its symbol in parallel with all other subchannels so that large amounts of data can be transmitted during each frame.

The number of bits carried by a symbol is dependent on the characteristics of the subchannel over which it is to be transmitted. This may vary from one subchannel to another. The principal determinant is the signal-to-noise ratio of the subchannel, Accordingly, this parameter is measured from time to time in order to ascertain its value for each subchannel, and thus determine the number of bits to be transmitted on the particular subchannel at a given time.

The telephone channel is subject to a number of impairments which must be compensated for in order to ensure reliable transmission. Phase (delay) distortion of the transmitted signal is typically the most limiting of these impairments. This distortion is frequency-dependent, and thus components of a signal at different frequencies are shifted by varying amounts, thereby distorting the signal and increasing the likelihood of erroneous detection unless provision is made to combat it. To this end, frequency (FDQ) and time delay (TDQ) equalizers are commonly incorporated into the transmission channel in order to equalize the phase (time) delay across the channel frequency band.

Other impairments also exist. For example, frequency-dependent signal attenuation adversely affects signal transmission on the telephone line. This is compensated by the use of gain equalizers on the line. Echo on the line is handled by the use of echo cancellers, and phase and frequency offsets which may arise, for example, from the use of frequency-division-multiplexing in the telephone system must also be corrected for.

The problem of signal impairment is especially serious in those xDSL configurations which carry the DSL communications on a common line with ordinary voice communications but which omit the use of a "splitter" at either the subscriber premises or the central office or both. A "splitter" is basically a filter which separates the low-frequency voice communications (e.g., from zero to four kilohertz) from the higher-frequency data communications (which may extend up into the megahertz band) and provides a strong degree of isolation between the two. In the absence of a splitter, unique provisions must be made to accommodate voice and data communications on the same line. For a more detailed description of the problem and its solution, see the application of Richard Gross et al. entitled "Splitterless Multicarrier Modern", WO990027A2, and assigned to the assignee of the present invention.

Because of their extensive use in Internet communications as well as in other applications, DSL transceivers are commonly maintained in the "on" state, ready to transmit or receive once they have been installed and initialized. Thus, such modems consume a significant amount of power, even when they are not actively transmitting or receiving data. It is generally desirable to limit this power consumption, both for environmental reasons as well as to prolong the life of the equipment. Further, such modems may be implemented or incorporated in part or in whole in computer equipment such as in personal computers for home and business use, and such computers increasingly incorporate power conservation procedures. See, for example, U.S. Patent No. 5,428,790, "Computer Power Management System", issued June 27, 1995 on the application of L. D. Harper. Thus, it is desirable to provide an ADSL modem which can accommodate power conservation procedures.

EP-A-0 473 465 relates to cellular telephone systems, wherein operating parameters such as the control channel number or the malfunction timer value are stored in a short term memory.

Because of the complexity of DSL transceivers, and the conditions under which they must operate, it is necessary to initialize them prior to the transmission and reception of data. This initialization includes, inter alia, channel corrections such as "training" the frequency- and time-domain equalizers and the echo cancellers; setting the channel gains; adjusting for phase and frequency offsets; and the like. Additionally, it includes measuring the signal-to-noise ratio of each of the subchannels, calculating the bit-allocation tables characteristic of each under given conditions of transmission, and exchanging these tables with other modems with a given modem communicates. For more detailed discussion of these procedures, reefer to the application of Richard Gross et al., cited above

. These procedures can require from tens to hundreds of seconds. In a new Installation, the time required is inconsequential. However, in an already-operating installation, the time required to initialize or re-initialize the system after a suspension of operation in connection with power conservation is generally unacceptable, since it is typically desired to have the modem respond to request for service nearly instantaneously.

Accordingly, it is an object of the invention to provide a multicarrier transmission system having a low power sleep mode and a rapid-on capability.

This object is achieved by a multicarrier transceiver according to claim 1, by a method according to claim 6 or by a use of such a method according to claim 11. Advantageous embodiments are subject of the subclaims.

Further, it is an object of the invention to provide a multicarrier transmission system for use in digital subscriber line communications that can rapidly switch from a sleep mode to a full-on condition.

Still another object of the invention is to provide aDSL system that can readily be integrated into a computer having a low power sleep mode and which is capable of rapid return to full operation.

The invention description below refers to the accompanying drawings, of which:
Fig. 1 is a block and line diagram of a multicarrier transmission system in accordance with the present invention; and
Fig. 2 is a flow diagram of the operation of the present invention,

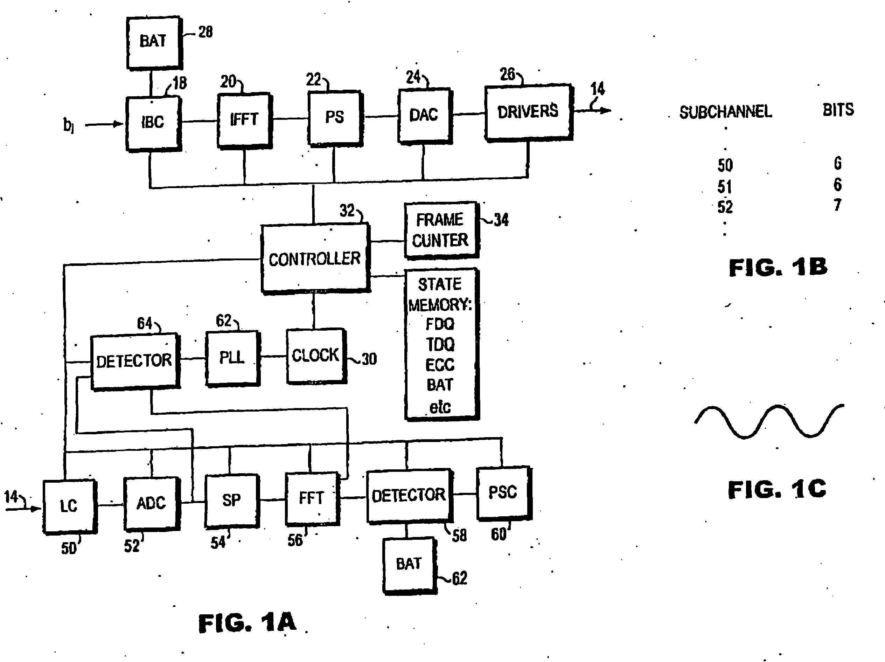

In Figure 1, a D SL transceiver 10 in accordance with the present invention has a transmitter section 12 for transmitting data over a digital subscriber line 14 and a receiver section 16 for receiving data from the line. The transmitter section 12 is formed from an input buffer and converter 18 that receives a serial string of data (e.g., binary digits) to be transmitted and converts the data into a plurality of pairs of complex-valued symbols Xi and their conjugates XN-i =X*i, i = 0, 1, ....N. These pairs of symbols are applied to an Inverse Fast Fourier Transform (IFFT) 20 to provide real time output signals xj, j = 0, 1, .....N/2 -1. The latter in turn are converted to serial form in a parallel-to-serial converter 22 and then applied to a digital-to-analog converter 24 for application to a line driver 26. The converter may apply a cyclic prefix to the signals xj to combat intersymbol interference caused by the transmission medium. The driver 26 may incorporate a gain control section 26a for controlling the signal amplitude (and thus power) as it is applied to a communication channel such as a digital subscriber line 24.

IFFT 20 may be viewed as a data modulator. The symbols Xi, and their conjugates XN-i, correspond to data points defining signal vectors in a quadrature amplitude modulation (QAM) constellation set. The converter 18 forms the respective symbols from the input data with the aid of a bit allocation table (BAT) 28 which specifies, for each subchannel, the number of bits to be carried by the symbol transmitted over that subchannel, and thus defines the data point to be associated with the symbol. This table is typically calculated at the transceiver and transmitted to other transceivers with which the instant transceiver communicates, to thereby enable them to decode the symbols received by them from the instant transceiver.

The number of bits which each symbol carries is determined by the characteristics of the subchannel over which the symbol is to be transmitted, and particularly by the signal-to-noise ratio of the subchannel, Procedure for this calculation are known. Figure 1A shows an example of such a table as formed and stored at transceiver 10. Thus, the symbol to be transmitted over subchannel 50 may be determined to have an allocation of six bits; that of subchanel 51, six bits; that of subchannel 52, seven bits, etc.

A Clock 30 controls the timing of the operation of the transmitter 12. It supplies input to a Controller 32 which controls the individual units of the transmitter. In the case of a transceiver located at a central telephone office, the clock 30 typically is a master clock to which a remote transceiver, such as at a subscriber premises, will be synchronized. In the case of a transceiver at the subscriber premises, such as is shown her for purposes of illustration, the clock is derived from the master clock at the central office as described more fully below in connection with the receiver portion of the transceiver. A Frame Counter (FC) 36 connected to the controller 32 maintains a count of the number of frames of data transmitted or received by the transceiver. Finally, a State Memory (SM) connected to the controller 34 records the state of the transceiver for reasons discussed more fully below.

Turning now to the receiver section 16, it is formed from a line conditioner 50; an analog-to-diotal converter (ADC) 52; a serial-to-parallel converter 54; a Fast Fourier Transform (FFT) section 56; a detector 58; and a parallel-to-serial converter 60. The conditioner 50 compensates for transmission distortions introduced by the line 14, and commonly includes a frequency-domain equalizer (FDQ) 50a; a time-domain equalizer (IDQ) 50b; and an echo canceller (EC) 50c, among other elements, The ADC 52 converts the received signal to digital form and applies it to the serial-to-parallel converter 54, The converter 54 removes any cyclic prefix that may have been appended to the signal before it was transmitted, and applies the resultant signal to the FFT 56 which effectively "demodulates" the received signal. The output of the FFT is applied to decoder58 which, in conjunction with a bit-allocation-table 62, recovers the symbols Xi and the bits associated with them. The output of detector 58 is applied to the parallel-to-serial converter 60 which restores the data stream that was originally applied to the transmitter.

A phase-lock loop (PLL) 62 receives from the line conditioner 50 a timing reference signal transmitted from the transmitter with which it communicates (e.g., the CO transceiver). The PLL 62 locks itself to this signal and drives a clock 64 in synchronism with the Master Clock in the driving transmitter. Control of the receiver section is provided by the controller 32.

As noted earlier, the transceiver of the present invention will commonly be incorporated in a computer such as a personal computer; indeed, it may be implemented as an integral part of such a computer, which may have a power conservation capability for activation when the computer is not in active operation. It is thus desirable that the transceiver be able to suspend operations and enter a "sleep" mode in which it consumes reduced power when it is not needed for data transmission or reception, but nonetheless be able to resume transmission or reception almost instantaneously, e.g., with less than a one-second delay. This is accomplished in the present invention as follows.

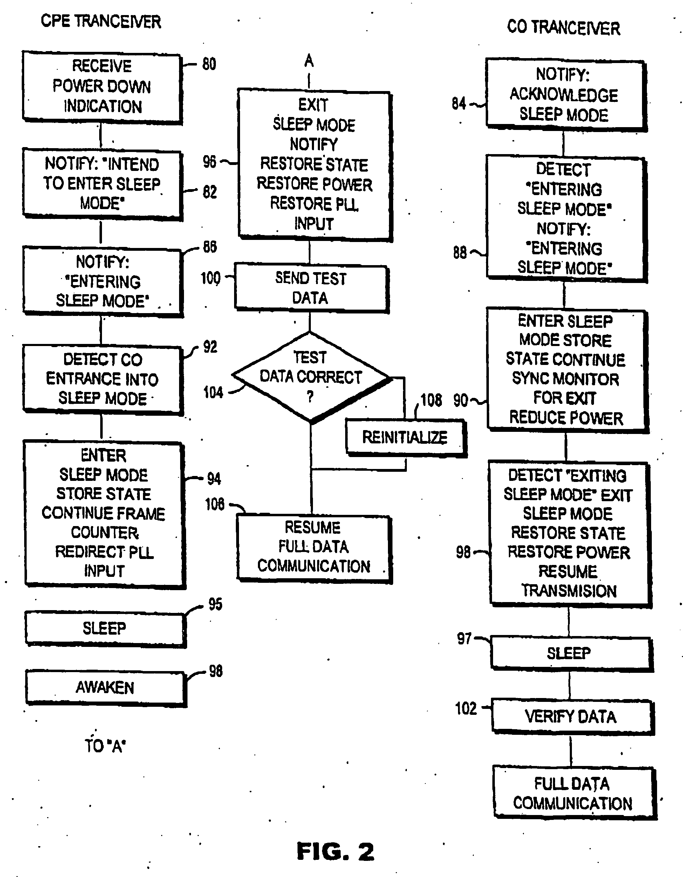

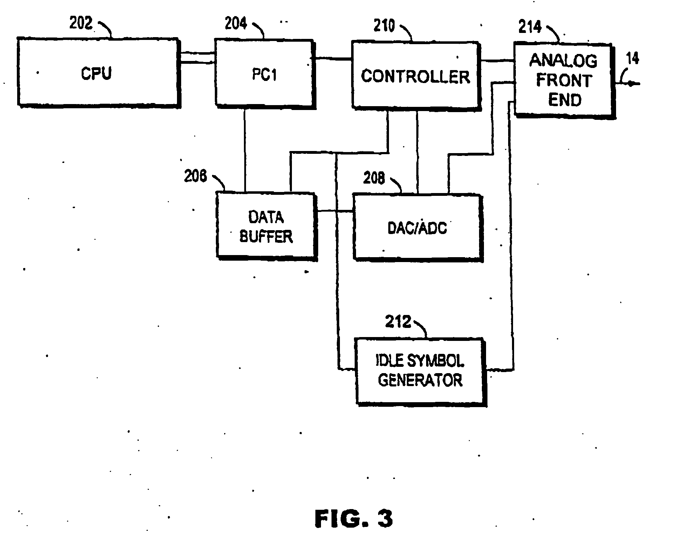

For purposes of illustration, the operation of the invention will be explained in terms of a transceiver located at a customer premises (herein termed the "CPE transceiver") communicating data over the customer's data subscriber line to a transceiver located at the central telephone office (herein referred to as the "CO transceiver"). Particular reference will be made to Figures 2 and 3 in connection with this discussion. The power down operation of the CPE transceiver begins on receipt of a power down command (step 80) by the CPE transceiver controller 32. The power down command may be applied to the controller 32 from an external source such as a personal computer in which the transceiver is included; it may be generated within the transceiver itself as a result of monitoring the input buffer 18 and determining that no data has been applied to it for a given time interval; or it may be responsive to a power down command from the CO transceiver.

Considering for the moment the first two cases, the CPE transceiver responds to the command by transmitting to the CO transceiver an "Entering Sleep Mode" signal (step 82). The CO transceiver responds by transmitting an "Acknowledge Sleep Mode" signal (step 84) to the CPE transceiver. Additionally, the CO transceiver transmits to the CPE transceiver a pilot tone (step 86) which enables the CPE transceiver to maintain synchronization with the CO transceiver during sleep mode. Specifically, as shown in Figure 1, the pilot tone is applied from the line conditioner 50 to the PLL 62 which drives the Local Clock 64 in synchrony with the Master Clock 30 at the CO transceiver. Clock 64 in turn drives the Frame Counter 66 in synchrony with the frame counter 36 at the CO transceiver.

The CO transceiver also stores its state (step 88) in receiver section state memory 38. The state preferably includes at least the frequency and time-domain equalizer coefficients (FDQ; TDQ) and the echo-canceller coefficients (ECC) of its receiver and the gain of its transmitter. The CO transceiver will also maintain the frame count and superframe count (step 90) to ensure synchrony with the remote CPE transceiver, It may, at this time, perform its own power reduction (step 92). In particular, it may reduce or cut off power to the digital modulator/demodulator portions of its transmitter and receiver sections; this provides a significant power reduction. Power will be maintained, of course, to at least that portion of the analog driver circuitry which transmits the pilot tone and other control signals to the CPE transceiver.

In response to the acknowledgment from the CO transceiver, the CPE transceiver enters the sleep mode (step 94) in which reduced or no power is applied to various components of the transceiver. In particular, it stores its state (step 96) in state memory 38, including preferably at least the frequency and time-domain equalizer coefficients (FDQ; TDQ) and the echo-canceller coefficients (ECC) of its receiver section, the gain of its transmitter section, and phase and frequency offset of its phase-locked , loop 62. It then powers down (step 98) its transmitter section, including both the digital modulator/demodulator circuitry and the analog line drivers.

During the sleep mode state, the CO transceiver continues to monitor (step 100) the data subscriber line for an "Awakening" signal from the CPE transceiver (step 104). The CPE transceiver transmits this signal when its controller receives an "Awaken" command (step 102) from an external source such as a computer in which it is installed or from other sources , or when its controller detects the presence of data in the input buffer 18. The CPE transceiver thereupon restores full power to its circuitry (step 106). It also retrieves its stored state from the state memory 38 (step 108). It can then immediately begin transmitting, since it need not repeat the initialization that was earlier required to establish requisite parameters (equalizer coefficients, echo canceller coefficients, gain, phase -lock-loop phase and frequency offsets, etc.). Prior to this time, of course, and in response to the "Awakening" signal from the CPE transceiver, the CO transceiver has restored its power (step 96), restored its state (step 96), and is ready to receive

On resuming communication, it may be desirable to transmit several frames of test (known) data (step 100) before resuming transmission of user data. This enables the system to verify that system conditions have not changed so significantly as to require renewed initialization. If the test is satisfactory (step 104), user data transmission then occurs (step 106). Otherwise, reinitialization must be performed (step 108) before user data transmission occurs.

As noted earlier, the transceiver 10 may alternatively be awakened by the CO transceiver. This is preferably accomplished by means of a tone 120 (Figure 3) transmitted from the latter to the CPE receiver. In response to that tone, the CPE receiver performs the sequence of steps shown at 96-106 in Figure 2.

## Claims

1. A multicarrier transceiver (10) having a sleep mode capability comprising:
means for storing parameters representing characteristics of a communications channel;
means for reducing power to portions of the transceiver (10) to enter the sleep mode;
means for restoring power to the portions;
means for restoring the transceiver (10) from the sleep mode based on the parameters; and
means for restoring communications without reinitialization of the transceiver (10);
wherein the transceiver (10) is adapted such that frames of known data are transmitted before resuming transmission of user data.

2. The transceiver according to claim 1, further comprising means for maintaining a synchronized data frame count.

3. The transceiver according to claim 1 or 2, further comprising a pilot tone that is utilized to maintain synchronization with a remote transceiver.

4. The transceiver according to any one of the preceding claims, further comprising means for maintaining synchronization between the transceiver (10) and another transceiver.

5. The transceiver according to any of the preceeding claims, wherein the transceiver is adapted to consume reduced power in the sleep mode.

6. The transceiver according to any one of the preceeding clains, wherein the transceiver is adapted to reduce power to parts of an analog circuitry during sleep mode.

7. A method for use in a multicarrier communications environment comprising:
storing parameters representing characteristics of a communications channel;
reducing power to portions of the transceiver (10) to enter a sleep mode;
restoring power to the portions;
restoring the transceiver (10) from the sleep mode based on the parameters;
restoring communications without reinitialization of the transceiver (10); and
transmitting frames of known data before resuming transmission of user data.

8. The method according to claim 7, further comprising maintaining a synchronized data frame count.

9. The method according to claim 7 or 8, further comprising utilizing a pilot tone to maintain synchronization with a remote transceiver.

10. The method according to any one of claims 7 to 9, further comprising maintaining synchronization between the transceiver (10) and another transceiver.

11. The method according to any one of claims 7 to 10, further comprising reducing power consumption in sleep mode.

12. The method according to any one of claims 7 to 11, further comprising reduction of power to parts of an analog circuitry during sleep mode.

13. Use of a method according to any one of the claims 7 to 12.

## Patentansprüche

1. Mehrträger-Transceiver (10) mit der Fähigkeit zu einem Energiesparmodus bzw. Schlafmodus aufweisen:
Mittel zum Speichern von Parametern, die Eigenschaften eines Kommunikationskanals repräsentieren;
Mittel zum Reduzieren der Stromversorgung bzw. Leistung oder Energie für Teile des Transceivers (10), um in den Energiesparmodus bzw. Schlafmodus einzutreten;
Mittel zum Wiederherstellen der Stromversorgung bzw. Leistung oder Energie für die Teile;
Mittel zum Zurückführen des Transceivers (10) aus dem Energiesparmodus bzw. Schlafmodus auf Basis der Parameter; und
Mittel zum Wiederherstellen der Kommunikation ohne Neuinitialisierung des Transceivers (10);
wobei der Transceiver (10) dazu ausgebildet ist, Rahmen bzw. Frames bekannter Daten vor Wiederaufnahme der Transmission von Nutzerdaten zu übertragen bzw. zu senden.

2. Transceiver nach Anspruch 1, wobei der Transceiver (10) ferner Mittel zum Führen bzw. Aufrechterhalten eines synchronisierten Datenrahmenzählwerts bzw. Datenframezählwerts aufweist.

3. Transceiver nach Anspruch 1 oder 2, wobei der Transceiver (10) ferner einen Pilotton aufweist, der verwendet wird, um die Synchronisation mit einem entfernten Transceiver aufrechtzuerhalten.

4. Transceiver nach einem der voranstehenden Ansprüche, wobei der Transceiver (10) ferner Mittel zur Aufrechterhaltung zur Synchronisation zwischen dem Transceiver (10) und einem anderen Transceiver aufweist.

5. Transceiver nach einem der voranstehenden Ansprüche, wobei der Transceiver zu einer reduzierten Stromaufnahme bzw. Leistungsaufnahme oder Energieaufnahme in dem Energiesparmodus bzw. Schlafmodus ausgebildet ist,

6. Transceiver nach einem der voranstehenden Ansprüche, wobei der Transceiver zur Reduktion der Stromversorgung bzw. Leistung oder Energie für Teile eines analogen Schaltkreises während des Schlafmodus ausgebildet ist.

7. Verfahren zur Verwendung in einer Mehrträger-Kommunikationsumgebung aufweisend:
Speichern von Parametern, die Eigenschaften eines Kommunikationskanals repräsentieren;
Reduzieren der Stromversorgung bzw. Leistung oder Energie für Teile des Transceivers (10), um in einen Energiesparmodus bzw. Schlafmodus einzutreten;
Wiederherstellen der Stromversorgung bzw. Leistung oder Energie für die Teile;
Zurückführen des Transceivers (10) aus dem Energiesparmodus bzw.
Schlafinodus auf Basis der Parameter;
Wiederherstellen der Kommunikation ohne Neuinitialisierung des Transceivers (10); und
Übertragen von Rahmen bzw. Frames bekannter Daten vor Wiederaufnahme der Transmission von Nutzerdaten.

8. Verfahren nach Anspruch 7, wobei ein synchronisierter Datenrahmenzählwert bzw. Datenframezählwert aufrechterhalten wird.

9. Verfahren nach Anspruch 7 oder 8, wobei ein Pilotton verwendet wird, um Synchronisation mit einem entfernten Transceiver aufrechtzuerhalten.

10. Verfahren nach einem der Ansprüche 7 bis 9, wobei die Synchronisation zwischen dem Transceiver (10) und einem anderen Transceiver aufrechterhalten wird.

11. Verfahren nach einem der Ansprüche 7 bis 10, wobei die Stromaufnahme bzw. Leistungs- oder Energieaußahme im Energiesparmodus bzw. Schlafmodus reduziert wird.

12. Verfahren nach einem der Ansprüche 7 bis 11, wobei die Stromversorgung bzw. Leistung oder Energie von Teilen eines analogen Schaltkreises während des Energiesparmodus bzw. Schlafmodus reduziert wird.

13. Verwendung eines Verfahrens nach einem der Ansprüche 7 bis 12.

## Revendications

1. Émetteur-récepteur à ondes porteuses multiples (10) possédant une capacité de mode Veille, comprenant :
un moyen pour stocker des paramètres représentant des caractéristiques d'une voie de transmission ;
un moyen de réduction de la puissance dans des portions de l'émetteur-précepteur (10) pour entrer dans le mode Veille ;
un moyen pour rétablir la puissance dans les portions ;
un moyen pour rétablir l'émetteur-récepteur (10) à partir du mode veille, en se basant sur les paramètres ; et
un moyen pour rétablir les communications sans réinitialiser l'émetteur-récepteur (10) ;
dans lequel l'émetteur-récepteur (10) est conçu de telle sorte que des trames de données connues sont transmises avant de reprendre la transmission des données utilisateurs.

2. Émetteur-récepteur selon la revendication 1, comprenant en outre un moyen pour maintenir un compte synchronisé de trames de données.

3. Émetteur-récepteur selon la revendication 1 ou 2, comprenant en outre une fréquence pilote qui est utilisée pour maintenir une synchronisation avec un émetteur-récepteur à distance.

4. Émetteur-récepteur selon l'une quelconque des revendications précédentes, comprenant en outre un moyen pour maintenir une synchronisation entre l'émetteur-récepteur (10) et un autre émetteur-récepteur.

5. Émetteur-récepteur selon l'une quelconque des revendications précédentes, dans lequel l'émetteur-récepteur est conçu pour consommer une puissance réduite dans le mode Veille.

6. Émetteur-récepteur selon l'une quelconque des revendications précédentes, dans lequel l'émetteur-récepteur est conçu pour réduire la puissance dans des parties d'un circuit analogique dans le mode Veille.

7. Procédé à utiliser dans un environnement de communication à ondes porteuses multiples, comprenant le fait de :
stocker des paramètres représentant des caractéristiques d'une voie de communication ;
réduire la puissance dans des portions de l'émetteur-récepteur (10) pour entrer dans le mode veille ;
rétablir la puissance dans les portions ;
rétablir l'émetteur-récepteur (10) à partir du mode Veille, en se basant sur les paramètres ;
rétablir les communications sans réinitialiser l'émetteur-récepteur (10) ; et
transmettre des trames de données connues avant de reprendre la transmission des données utilisateurs.

8. Procédé selon la revendication 7, comprenant en outre le fait de maintenir un compte synchronisé de trames de données.

9. Procédé selon la revendication 7 ou 8, comprenant en outre l'utilisation d'une fréquence pilote pour maintenir une synchronisation avec un émetteur-récepteur à distance.

10. Procédé selon l'une quelconque des revendications 7 à 9, comprenant en outre le maintien d'une synchronisation entre l'émetteur-récepteur (10) et un autre émetteur-récepteur.

11. Procédé selon l'une quelconque des revendications 7 à 10, comprenant en outre la réduction de la consommation de puissance dans le mode Veille.

12. Procédé selon l'une quelconque des revendications 7 à 11, comprenant en outre la réduction de la puissance dans des parties d'un circuit analogique dans le mode Veille.

13. Utilisation d'un procédé selon l'une quelconque des revendications 7 à 12.
